# EUROPÄISCHE PATENTSCHRIFT

(11) **EP 1 849 979 B1**
(45) Veröffentlichungstag und Bekanntmachung des Hinweises auf die Patenterteilung: **01.08.2012**
(21) Anmeldenummer: 07106469.5
(22) Anmeldetag: 19.04.2007
(51) Int. Cl.: F02D 41/00, F02D 19/08, F02D 41/14

(54) **Kolbenmotor und zugehöriges Betriebsverfahren**
Piston engine and its operation method
Moteur à piston et procédé de fonctionnement correspondant

(30) Priorität: 28.04.2006 DE 102006020349
(43) Veröffentlichungstag der Anmeldung: 31.10.2007
(73) Patentinhaber: Mahle International GmbH, 70376 Stuttgart (DE)
(72) Erfinder: ELSÄßER, Dr. Alfred, 75210, Keltern (DE)
(74) Vertreter: BRP Renaud & Partner

(56) Entgegenhaltungen:
- EP-A- 1 088 977
- EP-A- 1 188 916
- DE-A1- 19 859 018

## Beschreibung

Die vorliegende Erfindung betrifft ein Verfahren zum Betreiben eines Kolbenmotors, insbesondere in einem Kraftfahrzeug, mit den Merkmalen des Oberbegriffs des Anspruchs 1. Die Erfindung betrifft außerdem einen Kolbenmotor, insbesondere in einem Kraftfahrzeug, mit den Merkmalen des Oberbegriffs des Anspruchs 8.

Aus der EP 0 547 566 B1 ist ein Kolbenmotor bekannt, der in üblicher Weise mehrere Zylinder mit Einlassventilen, Auslassventilen, Brennräumen und darin verstellbaren Kolben aufweist. Des weiteren umfasst der Kolbenmotor eine Frischgasanlage zur Versorgung der Brennräume mit Frischgas, eine Kraftstoffanlage zur Versorgung der Brennräume mit Kraftstoff sowie eine Abgasanlage zum Abführen von Abgas aus den Brennräumen. Beim bekannten Kolbenmotor enthält die Frischgasanlage für jeden Zylinder ein Zusatzventil, das stromauf des Einlassventils des zugehörigen Zylinders angeordnet ist. Mit Hilfe dieser Zusatzventile kann beim bekannten Kolbenmotor die Frischgasversorgung der Brennräume so beeinflusst werden, dass sich im jeweiligen Zylinder eine Temperatur einstellt, die über die adiabate Verdichtungsendtemperatur hinausgeht. Dieses Betriebsverfahren des Kolbenmotors kann auch als Wärmeladung bezeichnet werden.

Aus der DE 43 08 931 C2 ist für einen Kolbenmotor ein als Impulsaufladung bezeichnetes Betriebsverfahren bekannt, bei dem beim jeweiligen Brennraum das zugehörige Einlassventil während eines Einlasshubs des zugehörigen Kolbens kurzzeitig geschlossen wird. Die hierbei auftretenden dynamischen Strömungseffekte führen zur gewünschten Impulsaufladung des jeweiligen Brennraums.

Aus der EP 1 088 977 A2 ist ein Verfahren zur Regelung eines Ansaugvolumens von Brennkraftmaschinen mit Mehrfach-Ansaugsystemen bekannt, bei dem die Brennkraftmaschine in zumindest zwei Motorbänke unterteilt ist, die jeweils ein separates Ansaugsystem aufweisen und die Ansaugsysteme Stellmittel zur Beeinflussung des Einsaugvolumens umfassen. Das bekannte Verfahren sieht vor, dass für jede Motorbank ein Drehmoment anhand einer Drehmoment äquivalenten Größe ermittelt wird und die Drehmomente miteinander verglichen und in Abhängigkeit von einer Abweichung der Drehmomente wenigstens eine das Ansaugvolumen beeinflussende Stellgröße des Stellmittels eines Ansaugsystems geändert wird.

Aus der EP 1 188 916 A2 sind ein Verfahren und eine Vorrichtung zur Steuerung der zylinderselektiven Füllung bei Verbrennungsmotoren mit variablem Ventiltrieb bekannt, wobei der Ventilhub und/oder die Ventilschließ- und öffnungszeiten der Zylindereinlassventile steuerbar sind. Zur Verbesserung der Leeriaufqualität wird vorgeschlagen, dass zumindest eine Eingangsgröße ermittelt wird, auf der auf die Befüllung oder Befüllungsunterschiede eines jeden Zylinders geschlossen werden kann, und dass aus dieser Eingangsgröße ein Steuersignal für den variablen Ventiltrieb bestimmt wird, derart, dass unterschiedliche Befüllungen der Zylinder durch eine Ventiltriebverstellung ausgeglichen werden.

Aus Pischinger "Variable Ventilsteuerung II", Expert Verlag, Seiten 244 bis 260, ist es bekannt, bei einem Kolbenmotor die Frischgasanlage stromauf von Einlassventilen zu entdrosseln, wobei zur Realisierung der vom jeweiligen Lastzustand des Kolbenmotors abhängigen Frischgasbeladung die Öffnungs- und Schließzeiten der Einlassventile entsprechend adaptiert werden. Die entdrosselte oder drosselfreie Frischgasanlage ist durch das Fehlen einer Drosselklappe charakterisiert, die sich bei einer herkömmlichen Frischgasanlage in einer Sammelleitung stromauf eines Frischgasverteilers befindet, um im Teillastbetrieb des Kolbenmotors die Frischgasversorgung der Brennräume in Abhängigkeit des aktuellen Lastzustands des Kolbenmotors zu drosseln. Die gedrosselte Frischgasversorgung ist problematisch, da die damit einhergehenden Drosselverluste bei der Ladungswechselarbeit vergleichsweise hoch sind. Darunter leidet die Qualität des Verbrennungsprozesses und führt zu vergleichsweise schlechten Emissionswerten und erhöhten Kraftstoffverbrauchswerten. Im Unterschied dazu lässt sich bei einer drosselfreien oder entdrosselten Frischgasanlage die Qualität des Verbrennungsprozesses signifikant verbessern, was zu reduzierten Emissions- und Kraftstoffverbrauchswerten führt.

Um die gewünschte Steuerung der Frischgasbeladung, also die Frischgasmengensteuerung bei entdrosselter Frischgasanlage realisieren zu können, arbeitet der bekannte Kolbenmotor mit einer elektromagnetischen Ventilsteuerung, die es erlaubt, die Einlassventile willkürlich zu öffnen und zu schließen. Derartige elektromagnetische Ventilsteuerungen sind jedoch erheblich teurer als herkömmliche, durch Nockenwellen gesteuerte Ventiltriebe.

Bei herkömmlichen Kolbenmotoren kann außerdem eine inhomogene Verteilung des Frischgases auf die einzelnen Brennräume beobachtet werden. Diese Inhomogenitäten sind das Ergebnis geometrischer und strömungstechnischer Eigenschaften der Frischgasanlage. Beispielsweise ist die Frischgasanlage für die einzelnen Brennräume unterschiedlich durch variierende Verzweigungen, Krümmungen, Querschnitte und Längen bei Frischgasleitungen sowie durch variierende Toleranzen innerhalb des Ventiltriebs und durch unterschiedlichen Verschleiß.

Insbesondere können sich die genannten Eigenschaften der Frischgasanlage im Laufe der Zeit, insbesondere durch Verschleiß, ändern.

Diese Inhomogenitäten innerhalb der Frischgaszuführung führen bei Kolbenmotoren, bei denen ein vorbestimmtes Kraftstoff-Frischgas-Verhältnis (λ-Wert) eingehalten werden soll, zu Problemen. Beispielsweise kann die Momenteinleitung in eine von den Kolben angetriebene Kurbelwelle von Zylinder zu Zylinder variieren, wenn bei konstanter Kraftstoffversorgung die Frischgasmenge bei den Zylindern schwankt. Eine ungleiche Momentenverteilung entlang der Zylinder führt zu einem unruhigen Motorlauf, der zu einem vorzeitigen Verschleiß des Kolbenmotors führen kann. Abgesehen davon lassen sich die gewünschten λ-Werte nicht einhalten mit den entsprechenden Folgen für Emissionen und Kraftstoffverbrauch.

Die vorliegende Erfindung beschäftigt sich mit dem Problem, für einen Kolbenmotor der eingangs genannten Art eine Möglichkeit aufzuzeigen, die insbesondere den Motorlauf verbessert und/oder die Einhaltung gewünschter λ-Werte verbessert.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das jeweilige Zusatzventil so anzusteuern, dass die den einzelnen Brennräumen zugeführte Menge an Frischgas zylinderselektiv, also für jeden Zylinder separat und unabhängig von den anderen Zylindern, einstellbar oder zumindest beeinflussbar ist. In Verbindung mit einer zylinderselektiven Messung des λ-Werts lässt sich mit Hilfe des oder der Zusatzventile bei jedem Zylinder der λ-Wert mehr oder weniger genau auf einen vorgegebenen Zielwert einstellen. Auf diese Weise können in der Frischgasanlage vorhandene geometrische und/oder strömungstechnische Unterschiede bei der Frischgasversorgung ausgeglichen werden. Des weiteren ermöglicht die zylinderselektive Frischgaszumessung mittels des jeweiligen Zusatzventils innerhalb des jeweiligen stationären Betriebszustands des Kolbenmotors die Zuführung einer für alle Zylinder gleichen Menge an Kraftstoff über die Kraftstoffanlage. Bei gleicher Kraftstoffmenge an allen Zylindern wird bei Erreichen des Zielwerts für das Kraftstoff-Luft-Verhältnis die Momenteinleitung in die Kurbelwelle an allen Zylindern im wesentlichen gleich groß, wodurch ein gleichförmiger Motorlauf erreicht wird.

Besonders vorteilhaft ist bei der Erfindung, dass auch Einflüsse auf die Frischgasversorgung der einzelnen Brennräume, die erst nach einiger Zeit, zum Beispiel durch Verschleiß, entstehen, durch eine entsprechende Anpassung in der Ansteuerung des Zusatzventils für jeden Zylinder separat ausgeglichen werden können.

Die Erfindung ist besonders vorteilhaft bei Kolbenmotoren, die mit einem Kraftstoff-Luft-Verhältnis von 1,0 betrieben werden sollen, da sich bei einem derartigen λ = 1-Konzept Abweichungen in Richtung mager die Emissionswerte und den Wirkungsgrad des Kolbenmotors signifikant verschlechtern und Abweichungen in Richtung fett das am jeweiligen Zylinder erzeugte Moment signifikant reduzieren.

Des weiteren eignet sich die vorliegende Erfindung in besonderer Weise für Kolbenmotoren, deren Frischgasanlage entdrosselt beziehungsweise drosselfrei ausgestaltet ist. Das Zusatzventil kann nämlich zur Zumessung der den einzelnen Brennräumen zuzuführenden Frischgasmenge verwendet werden.

Bemerkenswert ist, dass ein derartiges Zusatzventil für die Zumessung der Frischgasmenge stets zwischen zwei Schaltstellungen umgeschaltet wird, wobei durch die Öffnungszeit des Zusatzventils die dem jeweiligen Brennraum zugeführte Frischgasmenge gesteuert wird. In seinem Offenzustand weist das Zusatzventil einen vergleichsweise kleinen Durchströmungswiderstand auf, so dass ihm die Drosselwirkung einer herkömmlichen Drosselklappe fehlt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche, ähnliche oder funktional gleiche Komponenten beziehen. Es zeigen, jeweils schematisch,

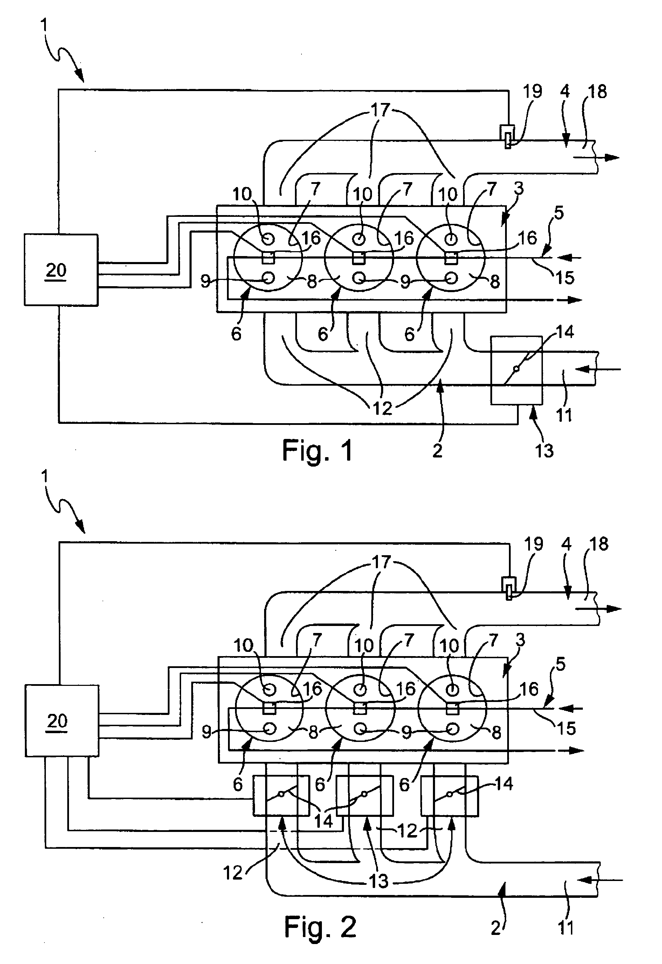

- Fig. 1 und 2: jeweils eine stark vereinfachte, schaltplanartige Prinzipdarstellung eines Kolbenmotors, jedoch bei verschiedenen Ausführungsformen.

Entsprechend den Fig. 1 und 2 umfasst ein Kolbenmotor 1, der vorzugsweise in einem Kraftfahrzeug angeordnet ist, eine Frischgasanlage 2, einen Motorblock 3, eine Abgasanlage 4 und eine Kraftstoffanlage 5. Des weiteren enthält der Kolbenmotor 1 in seinem Motorblock 3 mehrere Zylinder 6, die jeweils einen Brennraum 7 enthalten, in denen jeweils ein Kolben 8 hubverstellbar angeordnet ist und bei denen ein Ladungswechsel jeweils mit Hilfe wenigstens eines Einlassventils 9 und wenigstens eines Auslassventils 10 steuerbar ist. Entsprechende Ventiltriebe zum Ansteuern der Gaswechselventile 9, 10 sind hier zur Wahrung der Übersichtlichkeit nicht angedeutet.

Die Frischgasanlage 2 dient zur Versorgung der Brennräume 7 mit Frischgas, üblicherweise Luft. Hierzu weist die Frischgasanlage 2 eine gemeinsame Frischgasleitung 11 auf, von der für jeden Zylinder 6 ein einzelnes Frischgasrohr 12 abgeht.

Bei der in Fig. 1 gezeigten Ausführungsform enthält die Frischgasanlage 2 in der Frischgasleitung 11, also stromauf der Frischgasrohre 12 und insbesondere stromauf der Einlassventile 9 ein Zusatzventil 13. Im Unterschied dazu zeigt Fig. 2 eine Ausführungsform, bei der in jedem Frischgasrohr 12 ein solches Zusatzventil 13 angeordnet ist. Bei einem Motorblock 3 mit zwei Zylinderbänken kann die Frischgasanlage 2 zwei Frischgasleitungen 11 aufweisen, in denen jeweils ein solches Zusatzventil 13 angeordnet ist.

Das jeweilige Zusatzventil 13 ist zumindest zwischen einer Schließstellung und einer Offenstellung verstellbar. Ein entsprechendes Stellglied ist hier mit 14 bezeichnet und kann exemplarisch als Klappe, insbesondere als Schmetterlingsklappe, ausgestaltet sein. Ein Stellantrieb zum Antreiben des jeweiligen Stellglieds 14 ist hier nicht dargestellt. Der jeweilige Stellantrieb zeichnet sich dadurch aus, dass er extrem kurze Schaltzeiten für das jeweilige Schaltglied 14 ermöglicht. Insbesondere handelt es sich dabei um einen Hochgeschwindigkeitsstellantrieb, der zum Beispiel elektromagnetisch arbeitet und für das jeweilige Schaltglied 14 Schaltzeiten von weniger als 5 ms, insbesondere von weniger als 3 ms ermöglicht.

Bei den hier gezeigten, bevorzugten Ausführungsformen ist die Frischgasanlage 2 jeweils entdrosselt, also drosselfrei ausgestaltet. Das bedeutet, dass die Frischgasanlage 2 keine Drosseleinrichtung im herkömmlichen Sinne zur Frischgasmengensteuerung enthält, die mit einer lastabhängigen Drosselung der Frischgasströmung arbeitet. Die Frischgasmengensteuerung wird hier durch ein entsprechendes Öffnen und Schließen des jeweiligen Zusatzventils 13 realisiert. Beispielsweise wird die einem bestimmten Zylinder 6 zugeführte Frischgasmenge während eines Einlasshubs des jeweiligen Kolbens 8 bei geöffnetem Einlassventil 9 durch die Öffnungsdauer des jeweiligen Zusatzventils 13 bestimmt. Die Frischgasanlage 2 ist zumindest stromauf des Zusatzventils 13 bzw. stromauf der Zusatzventile 13 drosselfrei beziehungsweise entdrosselt ausgestaltet und enthält somit stromauf des oder der Zusatzventile 13 keine spezielle Drosseleinrichtung.

Die Kraftstoffanlage 5 ist hier exemplarisch als Common-Rail-System ausgestaltet und umfasst dementsprechend eine Hochdruckleitung 15, an die einzelne, jeweils einem der Brennräume 7 zugeordnete Injektoren 16 angeschlossen sind. Die Kraftstoffanlage 5 dient zur Versorgung der Brennräume 7 mit Kraftstoff.

Die Abgasanlage 4 umfasst hier für jeden Zylinder 6 ein separates Abgasrohr 17, über das Abgas aus dem jeweils zugeordneten Brennraum 7 abführbar ist. Die Abgasrohre 17 münden in eine gemeinsame Abgasleitung 18 der Abgasanlage 4 ein. In beziehungsweise an der Abgasleitung 18, also stromab der Abgasrohre 17 ist ein λ-Sensor 19 angeordnet. Dieser λ-Sensor 19 ist hier als Hochgeschwindigkeitssensor ausgestaltet, derart, dass er λ-Werte, also Kraftstoff-Frischgas-Verhältnisse λ im Abgas zylinderselektiv messen kann. Das bedeutet, dass die von den einzelnen Zylindern 6 nacheinander ausgestoßenen Abgasmengen separat hinsichtlich ihres λ-Werts vom λ-Sensor 19 untersucht werden können.

Der λ-Sensor 19 ist ebenso wie die Injektoren 16 und das bzw. die Zusatzventile 13 an eine Steuerung 20 angeschlossen. Die Steuerung 20 kann die vom λ-Sensor 19 ermittelten λ-Werte den einzelnen Zylindern 6 zuordnen, um dadurch die zylinderselektiven λ-Werte zu ermitteln. Es ist klar, dass anstelle eines einzigen λ-Sensors 19, der in der Abgasleitung 18 angeordnet ist, auch mehrere λ-Sensoren 19 verwendet werden können, die in den einzelnen Abgasrohren 17 angeordnet sind.

Die Steuerung 20 dient zum Auswerten der Messwerte des λ-Sensors 19 sowie zum Betreiben der Injektoren 16, also der Kraftstoffanlage 5 und zum Betreiben des Zusatzventils 13 oder der Zusatzventile 13. Die Steuerung 20 ist softwaremä-ßig und/oder hardwaremäßig so ausgestaltet, dass sie die damit verbundenen Komponenten, insbesondere das oder die Zusatzventile 13 und die Kraftstoffanlage 5 so betreiben bzw. ansteuern kann, dass mit Hilfe der Steuerung 20 das im folgenden beschriebene Verfahren zum Betreiben des Kolbenmotors 1 realisierbar ist.

Im Betrieb des Kolbenmotors 1 lassen sich mit Hilfe des λ-Sensors 19, gegebenenfalls unter Mitwirkung der Steuerung 20, zylinderselektive λ-Werte messen, die im Folgenden auch mit λ_{IST} bezeichnet werden. Die Kraftstoffanlage 5 wird bei einem stationären Betriebszustand des Kolbenmotors 1, also bei konstanter Last und Drehzahl so betrieben, dass allen Brennräumen 7 jeweils die gleiche Kraftstoffmenge zugeführt wird. Diese Kraftstoffmenge ergibt sich in Abhängigkeit des jeweiligen Betriebszustands bzw. Lastzustands des Kolbenmotors 1 und ist hinsichtlich Motorwirkungsgrad und Schadstoffemission optimiert. Die entsprechenden Kraftstoffmengen sind beispielsweise in der Steuerung 20 abgelegt. Des weiteren ist in der Steuerung 20 für den jeweiligen stationären Betriebszustand ein Zielwert λ_{Soll} für das Kraftstoff-Frischgas-Verhältnis λ abgespeichert, der bei seiner Einhaltung den Kolbenmotor 1 hinsichtlich Kraftstoffverbrauch und Schadstoffemission optimiert. Das jeweilige Zusatzventil 13 wird nun so betrieben bzw. angesteuert, dass bei besagtem stationären Betriebszustand die den einzelnen Brennräumen 7 zugeführte Frischgasmenge in Abhängigkeit des gemessenen Kraftstoff-Frischgas-Verhältnisses λ_{Ist} zylinderselektiv so eingestellt wird, dass sich der zuvor genannte Zielwert A_{SOLL} für das Kraftstoff-Frischgas-Verhältnis λ erzielen lässt. Zum Ansteuern des jeweiligen Zusatzventils 13 wird somit das Kraftstoff-Frischgas-Verhältnis λ eines Verbrennungsvorgangs verwendet, der im jeweiligen Zylinder 6 zu einem früheren Zeitpunkt stattgefunden hat, um die nächste Verbrennung in diesem Zylinder 6 hinsichtlich des Zielwerts λ_{Soll} für das Kraftstoff-Frischgas-Verhältnis λ zu optimieren. Bei einer besonders schnell reagierenden Steuerung 20 erfolgt die Ansteuerung des jeweiligen Zusatzventils 13 in Abhängigkeit des im jeweiligen Zylinder 6 im unmittelbar vorausgehenden Verbrennungsprozess entstandenen λ-Werts.

Besonders vorteilhaft ist eine Ausführungsform, bei welcher der Zielwert λₛₒₗₗ des Kraftstoff-Frischgas-Verhältnisses λ = 1 ist. Bei einem stöchiometrischen Verhältnis zwischen Kraftstoff und Frischgas wird die volle Konvertierungsrate eines Drei-Wege-Katalysators erreicht.

Des weiteren kann zur Betätigung des jeweiligen Zusatzventils 13 vorteilhaft ein geschlossener Regelkreis ausgebildet werden. Das für den jeweiligen Zylinder 6 separat gemessene Kraftstoff-Frischgas-Verhältnis λ bildet dann einen Ist-Wert und wird daher mit λ_{Ist} bezeichnet. Das Regelziel ist dabei die Einstellung des Zielwerts λ_{Soll} für das Kraftstoff-Frischgas-Verhältnis λ. Regelgröße ist die Frischgasmenge, die dem jeweiligen Zylinder 6 zugeführt wird. Die Frischgasmenge wird dabei durch eine entsprechende Betätigung des Zusatzventils 13 oder der Zusatzventile 13 für jeden Zylinder 6 separat eingestellt.

Bei einer bevorzugten Ausführungsform wird dem jeweiligen Betriebszustand des Kolbenmotors 1, insbesondere kennfeldmäßig, eine vorbestimmte Norm-Frischgasmenge zugeordnet, die für alle Zylinder 6 gleich groß ist. Erst wenn sich im Betrieb aufgrund der zylinderselektiven Messung des λ-Werts Unterschiede im Kraftstoff-Frischgas-Verhältnis λ zwischen den einzelnen Zylindern 6 zeigen, werden diese Unterschiede durch entsprechende Adaption der den einzelnen Zylindern 6 zugeführten Frischgasmenge korrigiert. Die Steuerung 20 bewirkt somit eine zylinderselektive Adaption der ursprünglich für alle Zylinder 6 gleichen Norm-Frischgasmenge, um so die den einzelnen Zylindern 6 tatsächlich zugeführte Frischgasmenge zylinderselektiv einstellen zu können.

Das Einstellen der Frischgasmenge erfolgt durch eine entsprechende Betätigung bzw. Ansteuerung des oder der Zusatzventile 13. Hierzu können Betriebsparameter des jeweiligen Zusatzventils 13 für jeden Zylinder 6 einzeln, also zylinderselektiv variiert bzw. adaptiert werden. Dabei ist es möglich, nur einen einzigen oder mehrere Betriebsparameter zu verändern. Zylinderselektiv einstellbare Betriebsparameter des jeweiligen Zusatzventils 13 sind beispielsweise, ohne Anspruch auf Vollständigkeit, die Öffnungsdauer des jeweiligen Zusatzventils 13, der Öffnungszeitpunkt des jeweiligen Zusatzventils 13, der Schließzeitpunkt des jeweiligen Zusatzventils 13, der Öffnungsquerschnitt des jeweiligen Zusatzventils 13, also bei einem hubverstellbaren Stellglied 14 der Öffnungshub und bei einem drehverstellbaren Stellglied 14 der Öffnungswinkel oder Drehwinkel. Des weiteren kann hinsichtlich der Öffnungs-Schließzeitpunkte auch deren relative Lage zu den Öffnungs- und Schließzeitpunkten der jeweiligen Einlassventile 9 von Bedeutung sein.

## Patentansprüche

1. Verfahren zum Betreiben eines Kolbenmotors (1), insbesondere in einem Kraftfahrzeug,
- wobei der Kolbenmotor (1) mehrere Zylinder (6) mit Einlassventilen (9), Auslassventilen (10), Brennräumen (7) und darin verstellbaren Kolben (8) aufweist,
- wobei der Kolbenmotor (1) eine Frischgasanlage (2) zur Versorgung der Brennräume (7) mit Frischgas aufweist, die zumindest ein einem oder mehreren oder allen Zylindern (6) zugeordnetes Zusatzventil (13) enthält,
- wobei der Kolbenmotor (1) eine Kraftstoffanlage (5) zur Versorgung der Brennräume (7) mit Kraftstoff aufweist,
- wobei der Kolbenmotor (1) eine Abgasanlage (4) zum Abführen von Abgas aus den Brennräumen (7) aufweist,
**dadurch gekennzeichnet,**
- **dass** in der Abgasanlage (4) zylinderselektiv ein Kraftstoff-Frischgas-Verhältnis (λ) im Abgas gemessen wird,
- **dass** die Kraftstoffanlage (5) so betrieben wird, dass sie bei einem stationären Betriebszustand des Kolbenmotors (1) allen Brennräumen (7) jeweils die gleiche Menge an Kraftstoff zuführt,
- **dass** das Zusatzventil (13) so betrieben wird oder dass die Zusatzventile (13) so betrieben werden, dass bei einem stationären Betriebszustand des Kolbenmotors (1) die den Brennräumen (7) zugeführte Menge an Frischgas in Abhängigkeit des gemessenen Kraftstoff-Frischgas-Verhältnisses (λ_{Ist}) zylinderselektiv zur Erzielung eines für alle Zylinder (6) gleichen Zielwerts (λ_{Soll}) für das Kraftstoff-Frischgas-Verhältnis (λ) eingestellt wird,
- **dass** das jeweilige Zusatzventil (13) für die Zumessung der Frischgasmenge stets zwischen zwei Schaltstellungen umgeschaltet wird,
- **dass** die dem jeweiligen Zylinder (6) zugeführte Frischgasmenge während eines Einlasshubs des jeweiligen Kolbens (8) bei geöffnetem Einlassventil (9) durch die Öffnungsdauer des jeweiligen Zusatzventils (13) bestimmt wird.

2. Verfahren nach Anspruch 1,
**dadurch gekennzeichnet,**
**dass** der Zielwert (λ_{Soll}) des Kraftstoff-Frischgas-Verhältnisses (λ) gleich 1 ist.

3. Verfahren nach Anspruch 1 oder 2,
**dadurch gekennzeichnet,**
**dass** das zylinderselektive Einstellen der zugeführten Frischgasmenge dadurch erfolgt, dass eine zum Einstellen des Zielwerts (λ_{Soll}) des Kraftstoff-Frischgas-Verhältnisses (λ) vorgesehene, dem jeweiligen Betriebszustand des Kolbenmotors (1) zugeordnete und für alle Zylinder (6) gleiche Norm-Frischgasmenge in Abhängigkeit einer Abweichung des zylinderselektiven Kraftstoff-Frischgas-Verhältnisses (λ_{Ist}) vom Zielwert (λ_{Soll}) zylinderselektiv adaptiert wird.

4. Verfahren nach einem der Ansprüche 1 bis 3,
**dadurch gekennzeichnet,**
**dass** das zylinderselektive Einstellen der zugeführten Frischgasmenge dadurch erfolgt, dass Betriebsparameter des Zusatzventils (13) oder der Zusatzventile (13) zylinderselektiv variiert und/oder adaptiert werden.

5. Verfahren nach Anspruch 4,
**dadurch gekennzeichnet,**
**dass** Betriebsparameter des jeweiligen Zusatzventils (13), die zylinderselektiv variierbar und/oder adaptierbar sind, wenigstens einen der folgenden Parameter umfassen: Öffnungsdauer des jeweiligen Zusatzventils (13), Öffnungszeitpunkt des jeweiligen Zusatzventils (13), Schließzeitpunkt des jeweiligen Zusatzventils (13), Öffnungsquerschnitt des jeweiligen Zusatzventils (13), Öffnungshub des jeweiligen Zusatzventils (13), Öffnungswinkel des jeweiligen Zusatzventils (13).

6. Verfahren nach einem der Ansprüche 1 bis 5,
**dadurch gekennzeichnet,**
**dass** das Betreiben des jeweiligen Zusatzventils (13) in Abhängigkeit der zylinderselektiven Kraftstoff-Frischgas-Verhältnisse (λ) als geschlossener Regelkreis zum zylinderselektiven Einstellen des Zielwerts (λ_{Soll}) des Kraftstoff-Frischgas-Verhältnisses (λ) bei allen Zylindern (6) ausgestaltet ist.

7. Verfahren nach einem der Ansprüche 1 bis 6,
**dadurch gekennzeichnet,**
**dass** die Frischluftanlage (2) entdrosselt und/oder drosselfrei ist.

8. Kolbenmotor, insbesondere in einem Kraftfahrzeug,
- mit mehreren Zylindern (6) mit Einlassventilen (9), Auslassventilen (10), Brennräumen (7) und darin verstellbaren Kolben (8),
- mit einer Frischgasanlage (2) zum Versorgen der Brennräume (7) mit Frischgas, die zumindest ein einem oder mehreren oder allen Zylindern (6) zugeordnetes Zusatzventil (13) aufweist,
- mit einer Kraftstoffanlage (5) zum Versorgen der Brennräume (7) mit Kraftstoff,
- mit einer Abgasanlage (4) zum Abführen von Abgas aus den Brennräumen (7),
- mit einer Steuerung (20) zum Betreiben der Kraftstoffanlage (5) und des Zusatzventils (13) in Abhängigkeit des Betriebszustand des Kolbenmotors (1),
**dadurch gekennzeichnet,**
- **dass** die Abgasanlage (4) wenigstens eine mit der Steuerung (20) gekoppelte λ-Sonde (19) aufweist, die so ausgestaltet ist, dass sie eine zylinderselektive Messung des Kraftstoff-Frischgas-Verhältnisses (λ) im Abgas ermöglicht,
- **dass** die Steuerung (20) so ausgestaltet ist, dass sie die Kraftstoffanlage (5) so betreibt, dass diese bei einem stationären Betriebszustand des Kolbenmotors (1) allen Brennräumen (7) jeweils die gleiche Menge an Kraftstoff zuführt, und das Zusatzventil (13) oder die Zusatzventile (13) so betreibt, dass dieses/diese bei einem stationären Betriebszustand des Kolbenmotors (1) die den Brennräumen (7) zugeführte Menge an Frischgas in Abhängigkeit der gemessenen Kraftstoff-Frischgas-Verhältnisse (λ_{Ist}) zylinderselektiv zur Erzielung eines für alle Zylinder (6) gleichen Zielwerts (λ_{Soll}) für das Kraftstoff-Frischgas-Verhältnis (λ) einstellt/einstellen,
- **dass** das jeweilige Zusatzventil (13) für die Zumessung der Frischgasmenge stets zwischen zwei Schaltstellungen umgeschaltet wird,
- **dass** die dem jeweiligen Zylinder (6) zugeführte Frischgasmenge während eines Einlasshubs des jeweiligen Kolbens (8) bei geöffnetem Einlassventil (9) durch die Öffnungsdauer des jeweiligen Zusatzventils (13) bestimmt wird.

9. Kolbenmotor nach Anspruch 8,
**dadurch gekennzeichnet,**
**dass** der Zielwert (λ_{Soll}) des Kraftstoff-Frischgas-Verhältnisses (λ) gleich 1 ist.

10. Kolbenmotor nach Anspruch 8 oder 9,
**dadurch gekennzeichnet,**
**dass** die Frischgasanlage (2) entdrosselt und/oder drosselfrei ist.

11. Kolbenmotor nach einem der Ansprüche 8 bis 10,
**dadurch gekennzeichnet,**
**dass** die Frischgasanlage (2) zumindest eine Frischgasleitung (11) aufweist, die den Brennräumen (6) über Frischgasrohre (12) Frischgas zuführt, wobei entweder in jeder Frischgasleitung (11) oder in jedem Frischgasrohr (12) jeweils ein Zusatzventil (13) angeordnet ist.

12. Kolbenmotor nach einem der Ansprüche 8 bis 11,
**dadurch gekennzeichnet,**
**dass** die Steuerung (20) zur Realisierung der in wenigstens einem der Ansprüche 3 bis 6 beschriebenen Verfahrensmerkmale ausgestaltet ist.

## Claims

1. A method for operating a piston engine (1), in particular in a motor vehicle,
- whereby the piston engine (1) has a plurality of cylinders (6) having intake valves (9), exhaust valves (10), combustion chambers (7) and pistons (8) adjustable therein,
- whereby the piston engine (1) has a fresh gas system (2) for supplying fresh gas to the combustion chambers (7), the system comprising at least one extra valve (13) which is assigned to one or more or all the cylinders (6),
- whereby the piston engine (1) has a fuel system (5) for supplying fuel to the combustion chambers (7),
- whereby the piston engine (1) has an exhaust system (4) for removing exhaust gas from the combustion chambers (7), **characterized in that**
- a fuel/fresh gas ratio (λ) is measured in the exhaust gas selectively for each cylinder in the exhaust system (4),
- the fuel system (5) is operated so that it supplies the same quantity of fuel to all combustion chambers (7) in a steady-state operating state of the piston engine (1),
- the extra valve (13) is or the extra valves (13) are operated so that in steady-state operation of the piston engine (1) the quantity of fresh gas supplied to the combustion chambers (7) is adjusted selectively for each cylinder as a function of the measured fuel/fresh gas ratio (λ_{actual}) to achieve a target value (λₛₑₜₚₒᵢₙₜ) for the fuel/fresh gas ratio (λ) that is the same for all cylinders (6),
- for the admixture of the quantity of fresh gas the respective extra valve (13) is always switched between two switch positions,
- the quantity of fresh gas supplied to the respective cylinder (6) during one intake stroke of the respective piston (8) while the intake valve (9) is open is determined by the opening duration of the respective extra valve (13).

2. The method according to Claim 1,
**characterized in that**
the target value (λₛₑₜₚₒᵢₙₜ) of the fuel/fresh gas ratio (λ) is equal to 1.

3. The method according to Claim 1 or 2,
**characterized in that**
the quantity of fresh gas supplied is adjusted selectively for each cylinder in such a way that a standard quantity of fresh gas which is the same for all cylinders (6) and is assigned to the particular operating state of the piston engine (1) is adapted as a function of a deviation in the cylinder-selective fuel/fresh gas ratio (λ_{actual}) from the target value (λₛₑₜₚₒᵢₙₜ) in a selective manner for each cylinder.

4. The method according to any one of Claims 1 through 3,
**characterized in that** the cylinder-selective adjustment of the quantity of fresh gas supplied is accomplished by varying and/or adapting the operating parameters of the extra valve (13) or extra valves (13) in a selective manner for each cylinder.

5. The method according to Claim 4,
**characterized in that**
operating parameters of the respective extra cylinder (13) which can be varied and/or adapted in a selective manner for each cylinder comprise at least one of the following parameters: opening duration of the respective extra cylinder (13), opening point in time of the respective extra valve (13), closing point in time of the respective extra valve (13), opening cross section of the respective extra valve (13), opening stroke of the respective extra valve (13), opening angle of the respective extra valve (13).

6. The method according to any one of Claims 1 through 5,
**characterized in that**
the operation of the respective extra valve (13) as a function of the cylinder-selective fuel/fresh gas ratio (λ) is designed as a closed control loop for cylinder-selective adjustment of the target value (λₛₑₜₚₒᵢₙₜ) of the fuel/fresh gas ratio (λ) for all cylinders (6).

7. The method according to any one of Claims 1 through 6,
**characterized in that**
the fresh air system (2) is dethrottled and/or throttle-free.

8. A piston engine, in particular in a motor vehicle, comprising
- a plurality of cylinders (6) having intake valves (9), exhaust valves (10), combustion chambers (7) and pistons (8) adjustable therein,
- a fresh gas system (2) for supplying fresh gas to the combustion chambers (7), said fresh gas system having at least one extra valve (13) assigned to one or more or all cylinders (6),
- a fuel system (5) for supplying fuel to the combustion chambers (7),
- an exhaust system (4) for removing exhaust gas from the combustion chambers (7),
- a controller (20) for operating the fuel system (5) and the extra valve (13) as a function of the operating state of the piston engine (1),
**characterized in that**
- the exhaust system (4) has at least one λ probe (19) that is linked to the controller (20) and is designed so that it allows a cylinder-selective measurement of the fuel/fresh gas ratio (λ) in the exhaust gas,
- the control (20) is designed so that it operates the fuel system (5) in such a way that, in a steady-state operating state of the piston engine (1), it supplies the same amount of fuel to all combustion chambers (7), and the extra valve (13) or extra valves (13) are operated in such a way that it/they adjust(s) the quantity of fresh gas supplied to the combustion chambers (7) as a function of the measured fuel/fresh gas ratio (λ_{actual}) in a selective manner for each cylinder in order to achieve a target value (Xₛₑₜₚₒᵢₙₜ) for the fuel/fresh gas ratio (λ) which is the same for all cylinders,
- for the admixture of the quantity of fresh gas the respective extra valve (13) is always switched between two switch positions,
- the quantity of fresh gas supplied to the respective cylinder (6) during one intake stroke of the respective piston (8) while the intake valve (9) is open is determined by the opening duration of the respective extra valve (13).

9. The piston engine according to Claim 8,
**characterized in that**
the target value (Xₛₑₜₚₒᵢₙₜ) of the fuel/fresh gas ratio (λ) is equal to 1.

10. The piston engine according to Claim 8 or 9,
**characterized in that**
the fresh gas system (2) is dethrottled and/or throttle-free.

11. The piston engine according to any one of the Claims 8 through 10,
**characterized in that**
the fresh gas system (2) has at least one fresh gas line (11) that supplies fresh gas to the combustion chambers (6) through fresh gas pipes (12), whereby an extra valve (13) is arranged either in each fresh gas line (11) or in each fresh gas pipe (12).

12. The piston engine according to any one of the Claims 8 through 11,
**characterized in that**
the controller (20) is designed for implementing the process features described in at least one of Claims 3 through 6.

## Revendications

1. Procédé de fonctionnement d'un moteur à piston (1), notamment dans un véhicule automobile,
- dans lequel le moteur à piston (1) présente plusieurs cylindres (6) avec des soupapes d'admission (9), des soupapes d'échappement (10), des chambres de combustion (7) et des pistons (8) déplaçables à l'intérieur de ceux-ci,
- dans lequel le moteur à piston (1) présente une installation de gaz frais (2) pour alimenter les chambres de combustion (7) en gaz frais, qui contient au moins une soupape auxiliaire (13) coordonnée à un ou plusieurs ou à tous les cylindres (6),
- dans lequel le moteur à piston (1) présente une installation de carburant (5) pour alimenter les chambres de combustion (7) en carburant,
- dans lequel le moteur à piston (1) présente une installation de gaz d'échappement (4) pour évacuer du gaz d'échappement hors des chambres de combustion (7),
**caractérisé en ce que**
- un rapport carburant- gaz frais (λ) est mesuré dans le gaz d'échappement (4) sélectivement par cylindre,
- l'installation de carburant (5) est exploitée de telle sorte qu'elle introduise respectivement la même quantité de carburant dans toutes les chambres de combustion (7) lors d'un état de fonctionnement stationnaire du moteur à piston (1),
- la soupape auxiliaire (13) est exploitée de telle sorte ou les soupapes auxiliaires (13) sont exploitées de telle sorte que lors d'un état de fonctionnement stationnaire du moteur à piston (1) la quantité de gaz frais introduite dans les chambres de combustion (7) soit réglée en fonction du rapport carburant - gaz frais mesuré (λ_{IST}) sélectivement par cylindre afin d'obtenir une valeur cible (λ_{SOLL}) identique du rapport carburant - gaz frais (λ) pour tous les cylindres (6),
- la soupape auxiliaire respective (13) est constamment commutée entre deux positions de commutation en vue du dosage de la quantité de gaz frais,
- la quantité de gaz frais introduite dans le cylindre respectif (6) pendant une course d'admission du piston respectif (8) est déterminée lorsque la soupape d'admission (9) est ouverte par la durée d'ouverture de la soupape auxiliaire respective (13).

2. Procédé selon la revendication 12,
**caractérisé en ce que**
la valeur cible (λ_{SOLL}) du rapport carburant - gaz frais (λ) est égale à 1.

3. Procédé selon les revendications 1 ou 2,
**caractérisé en ce que**
le réglage sélectif par cylindre de la quantité de gaz frais introduite est effectué **en ce que** une quantité de gaz frais normalisée prévue pour régler la valeur cible. (λ_{SOLL}) du rapport carburant - gaz frais (λ), coordonnée à l'état de fonctionnement respectif du moteur à piston (1) et identique pour tous les cylindres (6) est adaptée sélectivement par cylindre en fonction d'un écart du rapport carburant - gaz frais (λ_{IST}) sélectif par cylindre par rapport à la valeur cible (λ_{SOLL}).

4. Procédé selon une des revendications 1 à 3,
**caractérisé en ce que**
le réglage sélectif par cylindre de la quantité de gaz frais introduite est effectuée **en ce que** les paramètres de fonctionnement de la soupape auxiliaire (13) ou des soupapes auxiliaires (13) sont variés et/ou adaptés sélectivement par cylindre.

5. Procédé selon la revendication 4,
**caractérisé en ce que**
les paramètres de fonctionnement de la soupape auxiliaire respective (13), qui peuvent être variés et/ou adaptés sélectivement par cylindre, comprennent au moins un des paramètres suivants : durée d'ouverture de la soupape auxiliaire respective (13), moment d'ouverture de la soupape auxiliaire respective (13), moment de fermeture de la soupape auxiliaire respective (13), section transversale d'ouverture de la soupape auxiliaire respective (13), course d'ouverture de la soupape auxiliaire respective (13), angle d'ouverture de la soupape auxiliaire respective (13).

6. Procédé selon une des revendications 1 à 5,
**caractérisé en ce que**
le fonctionnement de la soupape auxiliaire respective (13) en fonction des rapports carburant - gaz frais (λ) sélectifs par cylindre est conçu comme un circuit de régulation fermé à des fins de réglage sélectif par cylindre de la valeur cible (λ_{SOLL}) du rapport carburant - gaz frais (λ) sur tous les cylindres (6).

7. Procédé selon les revendications 1 à 6,
**caractérisé en ce que**
l'installation de gaz frais (2) est sans étranglement et/ou restriction du débit.

8. Moteur à piston, notamment dans un véhicule automobile,
- comportant plusieurs cylindres (6) avec des soupapes d'admission (9), des soupapes d'échappement (10), des chambres de combustion (7) et des pistons (8) déplaçables dans ceux-ci,
- comportant une installation de gaz frais (2) pour alimenter les chambres de combustion (7) en gaz frais, qui présente au moins une soupape auxiliaire (13) coordonnée à un ou plusieurs ou tous les cylindres (6),
- comportant une installation de carburant (5) pour alimenter les chambres de combustion (7) en carburant,
- comportant une installation de gaz d'échappement (4) pour évacuer le gaz d'échappement hors des chambres de combustion (7),
- comportant une unité de commande (20) pour exploiter l'installation de carburant (5) et la soupape auxiliaire (13) en fonction de l'état de fonctionnement du moteur à piston (1),
**caractérisé en ce que**
- l'installation de gaz d'échappement (4) présente au moins une sonde λ (19) couplée à l'unité de commande (20), qui est conçue de telle sorte qu'elle permette une mesure sélective par cylindre du rapport carburant - gaz frais (λ) dans le gaz d'échappement,
- l'unité de commande (20) est conçue de telle sorte qu'elle fasse fonctionner l'installation de carburant (5) de telle sorte que celle-ci en présence d'un état de fonctionnement stationnaire du moteur à piston (1) introduise dans toutes les chambres de combustion (7) respectivement la même quantité de carburant, et fasse fonctionner la soupape auxiliaire (13) ou les soupapes auxiliaires (13) de telle sorte que celle-ci/celles-ci règle/règlent en présence d'un état de fonctionnement stationnaire du moteur à piston (1) la quantité de gaz frais introduite dans les chambres de combustion (7) en fonction du rapport carburant - gaz frais mesuré (λ_{IST}) sélectivement par cylindre afin d'obtenir une valeur cible (λ_{SOLL}) identique pour tous les cylindres (6) du rapport carburant - gaz frais (λ),
- la soupape auxiliaire respective (13) est commutée constamment entre deux positions de commutation pour le dosage de la quantité de gaz frais,
- la quantité de gaz frais introduite dans le cylindre respectif (6) pendant une course d'admission du piston respectif (8) est déterminée quand la soupape d'admission (9) est ouverte par l'intermédiaire de la durée d'ouverture de la soupape auxiliaire respective (13).

9. Moteur à piston selon la revendication 8,
**caractérisé en ce que**
la valeur cible (λ_{SOLL}) du rapport carburant - gaz frais (λ) est égale à 1.

10. Moteur à piston selon les revendications 8 ou 9,
**caractérisé en ce que**
l'installation de gaz frais (2) est sans étranglement et/ou restriction du débit.

11. Moteur à piston selon une des revendications 8 à 10,
**caractérisé en ce que**
l'installation de gaz frais (2) présente au moins une conduite de gaz frais (11), qui introduit du gaz frais dans les chambres de combustion (6) par l'intermédiaire de tuyaux de gaz frais (12), dans lequel une soupape auxiliaire (13) est respectivement disposée soit dans chaque conduite de gaz frais (11), soit dans chaque tuyau de gaz frais (12).

12. Moteur à piston selon une des revendications 8 à 11,
caractérisé e n ce que
l'unité de commande (20) est conçue afin de mettre en oeuvre les caractéristiques de procédé décrites dans au moins une des revendications 3 à 6.
